# EUROPEAN PATENT APPLICATION

(11) **EP 4 394 010 A1**
(43) Date of publication of application: **03.07.2024**
(21) Application number: 22861649.6
(22) Date of filing: 22.08.2022
(51) Int. Cl.: C09D 167/00, C09D 5/14, C09D 7/61, C09D 7/20, C09D 5/00

(54) **ANTIMICROBIAL COATING COMPOSITION AND ANTI-MICROBIAL, COATED STEEL SHEET USING SAME**

(30) Priority: 24.08.2021 KR 20210111302
(71) Applicant: POSCO Co., Ltd, Pohang-si, Gyeongsangbuk-do 37859 (KR)
(72) Inventor: JO, Du-Hwan, Pohang-si, Gyeongsangbuk-do 37877 (KR)
(74) Representative: Meissner Bolte Partnerschaft mbB
(86) International application number: PCT/KR2022/012469
(87) International publication number: WO 2023/027439

(57) **Abstract**

The present invention relates to an anti-microbial coating composition comprising: 30 to 60 weight % of a polyester resin; 3 to 15 weight % of a curing agent; 0.1 to 5 weight % of an anti-microbial agent; 0.1 to 15 weight % of a pigment; and the balance of a solvent on the basis of the total weight of the coating composition. The present invention also relates to an anti-microbial coated steel sheet comprising: a steel sheet; and an anti-microbial coating layer formed on at least one surface of the steel sheet, wherein an anti-microbial agent is contained in at least a part of the anti-microbial coating layer and has a Z/(M+Ca) content ratio of 0.1 to 0.5 wherein M is Ca, Ba, Mg, Zn, Ni, Fe, or Al and Z is P, As, V, or Si. The antimicrobial coating composition according to the present invention contains an anti-microbial agent, and when the composition is formed into a coating layer, the antimicrobial agent is enriched at the surface of the coating layer. Thus, microbes adsorbed, along with moisture, onto the coating surface are effectively killed by the hydroxy radical species and hydroxy anions generated on the coating surface. The coated steel sheet using the anti-microbial coating composition according to the present invention has excellent design properties as well as excellent workability and chemical resistance.

## Description

### Technical Field

The present disclosure relates to an antimicrobial coating composition including a polyester resin, a curing agent, an anti-microbial agent, a pigment, and a solvent, and an anti-microbial coated steel sheet using same, and relates to an antimicrobial coating composition and an antimicrobial coated steel sheet that has excellent killing effects of bacteria, viruses and fungi, is durable even when used for a long time, and has excellent design.

### Background Art

Recently, due to the global pandemic of the coronavirus (COVID-19), not only are socioeconomic problems serious, but the development of vaccines or treatments is urgent. Microorganisms that cause diseases in people or animals include various types thereof, such as hepatitis A, C and B viruses, HIV (AIDS) virus, E. coli, staphylococcus, Salmonella, tropical malaria protozoa, which correspond to 'bio-safety level 2,' mycobacterium tuberculosis, coronavirus (SARS1, MERS, and SARS2), Chikungunya fever virus, yellow fever virus, encephalitis virus, Q fever virus, rickettsia rickettsii, Brucella, West Nile virus, Francisella turalensis, which correspond to 'bio-safety level 3,' and Ebola virus, Marburg virus, Lhasa virus, and smallpox, which correspond to 'bio-safety level 4.'

The COVID-19 virus, which is currently spreading worldwide, is a virus that contains RNA nucleic acids in a spherical envelope of phospholipids and proteins. Most viruses infiltrate host cells of humans or animals and multiply by replicating nucleic acids in large quantities using ribosomes of host cells. Viruses have problems in that they are smaller in size than bacteria or fungi, can spread and replicate in a short time, and mutate quickly, making it difficult to develop treatments or vaccines.

As part of efforts to address a harmful environment in which such a threat exists, there is a need to develop a surface treatment product that can provide antiviral, antibacterial and anti-fungal functions that can inactivate or kill viruses, bacteria and fungi on a surface of a steel sheet, which is an essential material for our lives.

Recently, it has been reported that copper metal surfaces, nanometallic or metal ions, and quaternary ammonium ions have a killing function against bacteria and some viruses. Cu metal has the effect of killing microorganisms because the nanometallic particles eluted from the surface penetrate into an outer shell of bacteria or viruses which lose their replication function, and metal ions such as Ag, Ni and Zn are also reported to have the effect of killing microorganisms by a similar mechanism. Polymers including quaternary ammonium are reported to have the effect of killing microorganisms by binding their inherent hydrophobic functional groups to an outer shell of bacteria or viruses and destroying their functionality. However, an anti-microbial action by such compounds has a problem that the effect is not complete when treated on a surface of a material and takes a long time. In particular, a color steel sheet used for home appliances and dry materials are usually manufactured with a coating film thickness of 20 mm or more for long-term use for 20 years or more, and thus, in the case of the metal, it may be difficult to exhibit functionality on a surface of the coating film because the metal is likely to exist inside the coating film due to the high density of the metal when manufactured with a liquid coating composition and coated on a steel sheet.

In addition, in the case of metal of which a surface color of the coating film changes due to oxidation, such as copper metals during long-term use, there is a problem of discoloration. Furthermore, when quaternary ammonium is used, some effects are represented, but there may be limitations in use because the immediate effectiveness is insufficient and incomplete.

Therefore, when an antimicrobial coating composition and a coated steel sheets using the same are provided, they are expected to be widely applied in related fields.

### Summary of Invention

### Technical Problem

An aspect of the present disclosure is to provide an antimicrobial coating composition that can kill viruses, bacteria, and fungi, and does not change significant functionality thereof even when used for a long time because an inorganic compound is used instead of metal, thereby imparting an antimicrobial effect to a steel sheet. In addition, the present disclosure provides an antimicrobial coated steel sheet including an antimicrobial coating layer formed using the antimicrobial coating composition on at least one surface of a steel sheet.

### Solution to Problem

According to an aspect of the present disclosure, provided is an antimicrobial coating composition including: 30 to 60 weight % of a polyester resin; 3 to 15 weight % of a curing agent; 0.1 to 5 weight % of an anti-microbial agent; 0.1 to 15 weight % of a pigment; and a balance of a solvent on the basis of the total weight of the coating composition.

According to another aspect of the present disclosure, provided is an anti-microbial coated steel sheet including: a steel sheet; and an anti-microbial coating layer formed on at least one surface of the steel sheet, wherein at least a portion of the antimicrobial coating layer includes an antimicrobial agent, the anti-microbial agent has a weight ratio of Z/ (M+Ca) of 0.1 to 0.5, where the M is Ca, Ba, Mg, Zn, Ni, Fe or Al, and the Z is P, As, V, or Si.

### Advantageous Effects of Invention

An antimicrobial coating composition according to the present disclosure includes an anti-microbial agent, and when the composition forms a coating layer, because the antimicrobial agent is enriched on a surface of a coating layer, microorganisms adsorbed on a surface of a coating film together with moisture are effectively killed by hydroxy radical species and hydroxide anions generated on the surface of the coating film. In addition, a coated steel sheet using the antimicrobial coating composition according to the present disclosure is not only excellent in design, but also excellent in processability and chemical resistance

### Brief Description of Drawings

FIG. 1 illustrates a cross-sectional schematic view of an anti-microbial coated steel sheet of the present disclosure. FIG. 1 illustrates that an anti-microbial agent and a pigment are dispersed in a coating film.
FIG. 2 is a schematic cross-sectional view of an antimicrobial coated steel sheet of the present disclosure including a primer coating layer. FIG. 2 illustrates that an anti-microbial agent and a pigment are dispersed in a coating film.

### Best Mode for Invention

Hereinafter, preferred embodiments of the present disclosure will be described. However, embodiments of the present disclosure may be modified into various different forms, and the scope of the present disclosure is not limited to embodiments described below.

The present disclosure relates to an antimicrobial coating composition that can easily kill microorganisms adsorbed on a surface, and does not significantly change the characteristics of an inorganic compound even when coated on a steel sheet and used for a long time, and a coated steel sheet coated using the composition.

More specifically, the present disclosure provides an antimicrobial coating composition including: 30 to 60 weight % of a polyester resin; 3 to 15 weight % of a curing agent; 0.1 to 5 weight % of an anti-microbial agent; 0.1 to 15 weight % of a pigment; and a balance of a solvent on the basis of the total weight of the coating composition.

The type of polyester resin used in the antimicrobial coating composition of the present disclosure is not particularly limited, but a urethane modified polyester resin having excellent processability and chemical resistance of a coating film during curing may be preferably used.

Furthermore, although the present disclosure is not particularly limited thereto, the polyester resin may have a weight average molecular weight (Mw) of 2,000 to 30,000, preferably 5,000 to 25,000. When the molecular weight is less than 2,000, the chemical resistance and processability of the coating film may be insufficient, and when the molecular weight is greater than 30,000, the storage stability and workability of the solution may be deteriorated.

Furthermore, the polyester resin of the present disclosure may have a hydroxyl value of 10 to 300 (unit), preferably 20 to 200 (unit), and may have an acid value of 5 to 30 mgKOH/g, preferably 10 to 25 mgKOH/g. When the hydroxyl value and the acid value deviate from a lower limit range and an upper limit range, a crosslinking property of the coating film and the chemical resistance of the coating film may be deteriorated.

The polyester resin may be included in an amount of 30 to 60 weight % on the basis of the total weight of the coating composition. If the polyester resin deviates from the range, dryness may be degraded during curing of the coating film, and other physical properties may be deteriorated.

The antimicrobial coating composition of the present disclosure may use a curing agent together with the polyester resin to improve corrosion resistance of an applied steel sheet, but is not particularly limited thereto, and may use an aziridine-based curing agent, a melamine-based curing agent, and an isocyanate-based curing agent.

The aziridine-based curing agent in the present disclosure may preferably use an aziridine-based curing agent having the following structural formula (a).

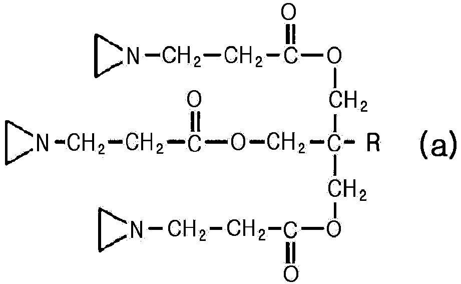

In the structural formula (a), R may be -H, -CH₃, - CH₂CH₃, -CH₂CH₂CH₃, -CH₂OH or -CH₂CH₂OH, and the aziridine-based curing agent may be used alone, or may be used in a mixture of two or more types thereof.

In addition, the melamine-based curing agent of the present disclosure may use imino melamine of the following structural formula (b) or methylated melamine of the following structural formula (c).

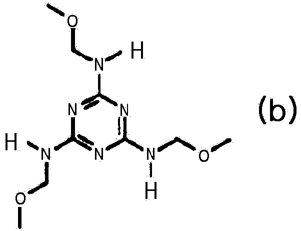

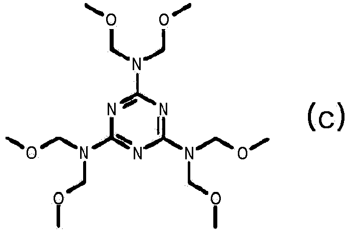

In the case of using a melamine-based curing agent, imino melamine and methylated melamine may be mixed and used at a weight ratio of 1:1 to 1:6, and may be mixed and used at a weight ratio of, preferably 1:1 to 1:4. The imino melamine has a high curing reaction speed, which is advantageous for high-speed curing, and as the content of the imino melamine increases, the degree of curing increases and the hardness of the coating film increases. The methylated melamine has a slow curing speed, but the smoothness of the coating film may be improved, thereby providing excellent surface quality. Accordingly, the imino melamine may be added to methylated melamine and used, thereby improving the surface quality of the coating film as well as the reaction speed.

The imino melamine may be, for example, dimethoxymethyl melamine, trimethoxymethyl melamine, teramethoxy melamine, triethoxymethyl melamine, or tributoxymethyl melamine, and the methylated melamine may be butoxymethyl melamine, hexabutoxymethyl melamine, hexaethoxymethyl melamine or hexamethoxymethyl melamine.

Furthermore, as the isocyanate-based curing agent of the present disclosure, an isocyanate-based curing agent such as a monoisocyanate of the following structural formula (d) or a diisocyanate of the following structural formula (e) may be used.

**R - N=C=O** (d)

**O=C=N - R'** - **N=C=O** (e)

In Structural Formula (d) above, R may be methyl, ethyl, propyl, phenyl, 2-isopropylphenyl, or cyclohexyl, and in the structural formula (e), R' may be 1,3-phenylene, 1,4-phenylene, tolylene-2,4, tolylene-2,6, m-xylylene, dicyclohexylmethane 4,4', methyldiphenyl 4,4', or hexamethylene, and the isocyanate-based curing agent may be used alone or may be used in a mixture of two or more types thereof.

The curing agent may be included in an amount of 3 to 15 weight % on the basis of the total weight of the coating composition. When the content of the curing agent is less than 3 weight %, the curing reaction of a dry coating film is not properly performed, which may deteriorate the physical properties of the coating film, and when the content thereof is greater than 15 weight %, processability may be deteriorated due to an excessive amount of curing agents.

The antimicrobial coating composition of the present disclosure may include a pigment to have a unique color. The type of pigment that can be used in the present disclosure is not particularly limited, but specifically, at least one inorganic pigment selected from the group consisting of black, red, and white pigments may be used, and preferably at least one selected from the group consisting of carbon black, carbon nanotubes, graphite, graphene, ferric oxide (Fe₂O₃) and titanium dioxide (TiO₂) may be used.

The pigment of the present disclosure may be included in an amount of 0.1 weight % to 15 weight % on the basis of the total weight of the coating composition. When the content of the pigment is less than 0.1 weight %, hiding power of the steel sheet is insufficient, which may make it difficult to implement the color, and when the content thereof is greater than 15 weight %, the viscosity of the composition may increases to deteriorate workability, which may make it difficult to obtain an excellent surface appearance.

Furthermore, the pigment having a low oil absorption rate may be used. The oil absorption rate of the pigment may be, more preferably, less than 60%, and most preferably, 5 to 50%. When the oil absorption rate is greater than 60%, workability may be poor and it may be difficult to obtain a predetermined surface texture.

As the pigment of the present disclosure, a pigment having an average particle size (particle diameter) within ±5 um of a thickness of a dry coating film may be used, for example, 5 to 30 um. Furthermore, in addition to the colored inorganic pigment, an anti-rusting pigment for enhancing anti-rusting properties of a coating film may be additionally included, and colloidal silica, silica sol, alkali metal silicate, or the like, may be used as the rust preventive pigment.

The antimicrobial coating composition of the present disclosure may include an anti-microbial agent exhibiting antimicrobial properties. In the present disclosure, the microorganism is a concept including all prokaryotic microorganisms, eukaryotic microorganisms, and non-cellular microorganisms and denotes bacteria, viruses, and fungi.

The anti-microbial agent of the present disclosure may be M₁₀(ZO₄)₆X₂, and Ca(OH)₂, or a mixture thereof, where the M may be Ca, Ba, Mg, Zn, Ni, Fe, or Al, the Z may be P, As, V, or Si, and the X may be F, OH, Cl, O, or CO₃. Specifically, M₁₀(ZO₄)₆X₂ may be Ca₁₀(PO₄)₆(OH)₂ or Mg₁₀(PO₄)6(OH)₂, but the anti-microbial agent may be used without limitation as long as it can produce hydroxy radical species. Ca(OH)₂ may produce a hydroxide anion. In an embodiment, the anti-microbial agent of the present disclosure may be a mixture of M₁₀(ZO₄)₆X₂ and Ca(OH)₂.

When the coating composition including the antimicrobial agent forms a coating layer on a steel sheet, the microorganisms adsorbed on the surface of the coating layer are effectively killed by hydroxy radical species and hydroxide anions generated in the coating layer. Furthermore, microorganisms may be easily adsorbed on the surface of the coating layer by moisture included in the microorganisms, and accordingly, the hydroxy radical species and the hydroxide anions are generated, thereby more easily killing the microorganisms.

The anti-microbial agent may be a mixture of M₁₀(ZO₄)₆X₂ and Ca(OH)₂ in a weight ratio of 5:1 to 1:5, preferably a weight ratio of 3:1 to 1:3. Within this range, the anti-microbial agent may have the most effective antimicrobial property.

Specifically, the anti-microbial agent of the present disclosure is an inorganic compound, which has a relatively smaller density than metal particles, and when forming a coating layer, the anti-microbial agent may easily float to the surface of the coating layer, and may be mainly enriched on the surface of the coating layer during drying, thereby easily killing the microorganisms adsorbed on the surface.

The antimicrobial coating composition of the present disclosure may be manufactured by dispersing a curing agent in a polyester resin, which is a main resin, to prepare a resin composition, adding and dispersing a pigment and an anti-microbial agent thereto, and adding the same to a solvent.

The solvent may include at least one selected from the group consisting of toluene, xylene, isopropanol, solvent naphtha, cellosolve, cellosolve acetate, and butyl cellosolve, and may be used alone or may be used in a mixture of two or more types thereof.

The solvent is the remainder other than the polyester resin, the curing agent, the anti-microbial agent, and the pigment, and the viscosity of the coating composition may vary according to the content of the solvent, but the content of the solvent added to the composition may be appropriately adjusted as necessary. For example, in consideration of the coating amount and adhesion of the coating composition, the solvent may be adjusted in a content that can maintain a viscosity that takes 20 to 200 seconds to be discharged from a DIN cup (DIN, 53211).

The coating composition of the present disclosure may further include additives such as wax, a curing catalyst, pigment agglomeration inhibitor, an anti-foaming agent, a leveling agent, if necessary, in addition to the above-described components to further improve the physical properties of the coating film. The additives may be appropriately used in the present disclosure as long as the additives are generally used in the pertinent art, and may be applied to the coating composition of the present disclosure according to a conventional method of use.

Furthermore, when a coating film is formed using the coating composition of the present disclosure, each component of the coating composition may form a composite network structure, thereby having excellent press processability and surface functionality.

Another embodiment of the present disclosure provides an anti-microbial coated steel sheet including an antimicrobial coating layer formed of the antimicrobial coating composition provided by the present disclosure on at least one of both surfaces of the steel sheet. An anti-microbial agent may be dispersed and present in the anti-microbial coating layer.

Specifically, the present disclosure includes a steel sheet and an anti-microbial coating layer formed on at least one surface of the steel sheet, and provides an antimicrobial coated steel sheet in which an anti-microbial agent is included in at least a portion of the anti-microbial coating layer, and the anti-microbial agent has a Z/(M+Ca) content ratio of 0.1 to 0.5, where the M is Ca, Ba, Mg, Zn, Ni, Fe or Al, and the Z is P, As, V or Si.

In the anti-microbial coated steel sheet of the present disclosure, the steel sheet may be a plated steel sheet. Specifically, a galvanized steel sheet may be used as the plated steel sheet, and for example, a hot-dip galvanized steel sheet (GI), an alloyed hot-dip galvanized steel sheet (GA), an electro-galvanized steel sheet (EG), an aluminum-plated steel sheet, or a zinc-aluminum-magnesium ternary alloy plated steel sheet may be used.

Furthermore, the anti-microbial coating layer may be formed of an antimicrobial coating composition including: 30 to 60 weight % of a polyester resin; 3 to 15 weight % of a curing agent; 0.1 to 5 weight % of an anti-microbial agent; 3.0 to 15 weight % of a pigment, and a balance of a solvent on the basis of the total weight of the coating composition.

When a coating film is formed using the antimicrobial coating composition of the present disclosure, the coating film may have a thickness of 3 to 40 um, preferably 5 to 30 um, after drying. When the coating composition which may have various colors by including the pigment, has a thickness of less than 5 um after drying, there may be a problem of poor color development, poor hiding power, poor processability, and poor solvent resistance of the coating film, and when the thickness exceeds 30 um, manufacturing costs may increase and productivity may decrease.

In another embodiment of the present disclosure, when an anti-microbial coating layer is formed only on one surface of a plated steel sheet, a coating layer in consideration of processability and corrosion resistance of the steel sheet may be formed on the other surface of the plated steel sheet on which the anti-microbial coating layer is not formed.

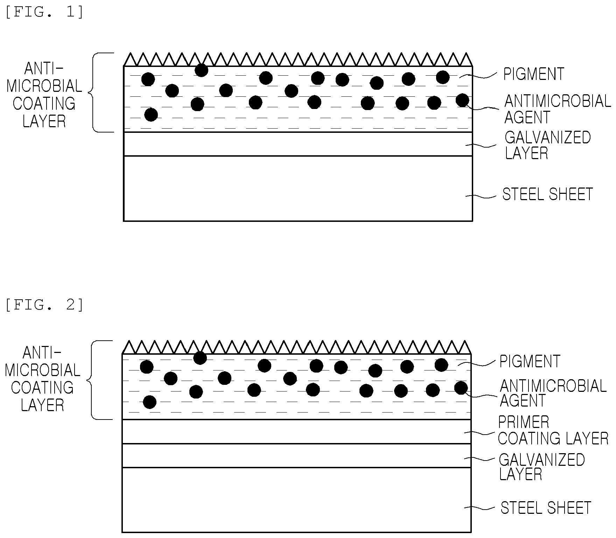

According to an embodiment of the present disclosure, a primer coating layer may be formed on both surfaces of the plated steel sheet, and an anti-microbial coating layer of the present disclosure may be formed on at least one surface of the primer coating layer. That is, as illustrated in FIG. 2, the primer coating layer may be disposed between the plated steel sheet and the antimicrobial coating layer.

The primer coating layer is intended to improve the coating adhesion between a surface of a steel sheet and the anti-microbial coating layer, the hardness of a coating film, chemical resistance, and corrosion resistance, and a commercially available composition for forming an undercoat layer may be appropriately selected and used according to the use of the steel sheet and the type of steel sheets or resins. For example, an epoxy polyester-based paint, an epoxy-modified polyester-based paint, a polyester-based paint for PCM, or a polyester-based undercoat for modified PMC may be used.

In order to enhance anti-rusting properties of the primer coating layer and ensure corrosion resistance, a conventional chromium-based or chromium-free rust preventive pigment may be further included. The chromium-based rust preventive pigment may use Zinc Potassium Chromate, Zinc Tetraoxy Chromate, Strontium Chromate, or the like, and the chromium-free rust preventive pigment may use Barium Metaborate, Zinc Molybdate, Calcium Zinc Molybdate, Zinc Phosphate, Aluminum Triphosphate, Calcium Borosilicate, Phosphosilicate, or the like.

A thickness of the dry coating film of the primer coating layer is not particularly limited, but when the thickness is less than 3 um, the anti-rusting properties and adhesion may be degraded, and when the thickness is greater than 7 um, surface appearance defects and economic feasibility may be degraded, and thus, the thickness of the dry coating film may be, preferably 3 to 7 um, and more preferably 4 to 6 um.

As a method of forming the primer coating layer, a roll coating method, or a curtain flow method used in a PCM steel sheet may be used. Furthermore, a sintering condition after coating may have a peak metal temperature (PMT) of 180 to 220°C in a continuous line of the PCM.

When a primer coating layer is further included, the primer coating layer may be formed to have a thickness of 1 um to 10 um.

By further including the primer coating layer, an anti-rusting effect and hiding power of the plated steel sheet may be increased, and diffuse reflection of light may be reduced, thereby exhibiting more excellent color development.

Furthermore, the anti-microbial coated steel sheet of the present disclosure may include a coating film additionally formed on at least one surface of a steel sheet, and the additional coating film may be included without limitation as long as it may be applied between a base steel sheet and a top coating film in the pertinent art, by increasing the adhesion between the steel sheet and the antimicrobial coating layer, and imparting physical properties generally required by other steel sheets, such as coating properties and corrosion resistance, to the plated steel sheet.

Hereinafter, the present disclosure will be described in more detail with reference to specific embodiments. The following embodiments are merely examples for helping understanding of the present disclosure, and the scope of the present disclosure is not limited thereto.

### Mode for Invention

### Example

### 1. Manufacture of Antimicrobial Coating Composition

An antimicrobial coating composition including an urethane-modified polyester, a curing agent, a pigment, and an anti-microbial agent in the contents as illustrated in Table 1 below was manufactured.

A resin with a weight average molecular weight of 16,000 to 20,000 (KCC Co., Ltd., Tg=10 to 30°C) was used as the urethane modified polyester resin, trimethylolpropane tri(β-N-aziridinyl) propionate was used as an aziridine-based curing agent, methoxymethyl melamine was used as a melamine-based curing agent, and toluene diisocyanate was used as an isocyanate-based curing agent, respectively. Carbon black (Ebonix, Printex^{™}) was used as a black pigment, ferric oxide (Fe₂O₃) was used as a red pigment, and titanium dioxide (TiO₂) was used as a white pigment, respectively. As an anti-microbial agent, hydroxyapatite (Ca₁₀(PO₄)₆(OH)₂) (KR BIOTECH Ltd.), calcium hydroxide (Ca(OH)₂) or a mixture in which the hydroxyapatite and calcium hydroxide are mixed at a weight ratio of 1:3 to 3:1 was used.

**Table 1:**

| DIVISION (UNIT: WEIGHT %) | | URETHANE-MODIFIED POLYESTER | CURING AGENT | | | PIGMENT | | | ANTI-BIO COMPOUND | |
|---|---|---|---|---|---|---|---|---|---|---|
| | | | AZIRIDINE-BASED | MELAMINE-BASED | ISOCYANATE-BASED | BLACK | RED | WHITE | HYDROXY APATITE | CALCIUM HYDROXIDE |
| INVENTIVE EXAMPLE | **1** | **60** | **10** | **0** | **0** | **3** | **2** | **2** | **1** | **3** |
| | 2 | 60 | 0 | 10 | 0 | 2 | 3 | 2 | 1 | 3 |
| | 3 | 60 | 0 | 0 | 15 | 2 | 2 | 3 | 1 | 3 |
| | 4 | 60 | 10 | 0 | 0 | 7 | 0 | 0 | 1 | 3 |
| | 5 | 60 | 0 | 10 | 0 | 0 | 7 | 0 | 1 | 3 |
| | 6 | 60 | 0 | 0 | 15 | 0 | 0 | 7 | 1 | 3 |
| | **7** | **60** | **10** | **0** | **0** | **3** | **2** | **2** | **3** | **1** |
| | 8 | 60 | 0 | 10 | 0 | 2 | 3 | 2 | 3 | 1 |
| | 5 | 60 | 0 | 0 | 15 | 2 | 2 | 3 | 3 | 1 |
| | 10 | 60 | 10 | 0 | 0 | 7 | 0 | 0 | 3 | 1 |
| | 11 | 60 | 0 | 10 | 0 | 0 | 7 | 0 | 3 | 1 |
| | 12 | 60 | 0 | 0 | 15 | 0 | 0 | 7 | 3 | 5 |
| | 13 | 60 | 0 | 10 | 0 | 2 | 3 | 2 | 1 | 0 |
| | 14 | 60 | 0 | 10 | 0 | 2 | 3 | 2 | 3 | 0 |
| | 15 | 60 | 0 | 10 | 0 | 2 | 3 | 2 | 0 | 1 |
| | 16 | 60 | 0 | 10 | 0 | 2 | 3 | 2 | 0 | 3 |
| COMPARATIVE EXAMPLE | 1 | 60 | 10 | 0 | 0 | 3 | 2 | 2 | 0 | 0 |
| | 2 | 60 | 0 | 10 | 0 | 0 | 7 | 0 | 0 | 0 |
| | 3 | 60 | 0 | 0 | 15 | 2 | 3 | 2 | 0 | 0 |

### 2. Manufacturing and physical Property evaluation of Anti-microbial Coated Steel sheet

An anti-microbial coated steel sheet was manufactured by performing drying on a Zn-Al-Mg ternary alloy plates steel sheet having a single-side plating amount of 60g/m² using the antimicrobial coating composition manufactured in section 1 above, roll-coating the plated steel sheet to a thickness of 15 to 20 um, performing curing and drying at a peak metal temperature (PMT) of 232°C, and performing cooling.

In a case of having a primer coating layer, a thickness of the primer coating layer was set to 5 um. A thickness of the coating film was measured using a non-destructive portable film thickness gauge.

### (1) Appearance Evaluation

A design of a color of a coating film and uniformity and continuity of a texture were evaluated relatively, and were illustrated as follows.

### [Evaluation Criteria] O: (very excellent), O: (excellent), Δ: (poor), and X: (very poor)

### (2) Gloss Evaluation

A 60° specular reflection value was measured and evaluated using a SHEEN instrument.

### (3) Pencil Hardness Evaluation

A 10 cm line was drawn at a 45° angle with a Mitsubishi pencil (HB to 4H) under a load of 1000110g, and then evaluated for the presence or absence of scratches.

### (4) Corrosion Resistance Evaluation

Corrosion resistance was evaluated using a composite salt spray method (Cyclic Corrosion Test, CCT). Salt spray (concentration 5%, spray pressure of 1 kg/cm² at 35°C) was performed for 5 hours at 95% relative humidity, and one cycle consists of drying for 2 hours at a relative humidity of 30% and a temperature of 70°C, followed by a treatment for 3 hours at a relative humidity of 95% and a temperature of 50°C. After repeating 100 cycles, an area of white rust occurring on a surface of a steel sheet was evaluated.

[Evaluation Criteria] ⊚: corrosion area is 0%, O: corrosion area is more than 0 and less than 5%, Δ: corrosion area is more than 5 and less than 30%, and X: corrosion area is more than 30%.

### (5) Processability Evaluation

For an anti-microbial coated steel sheet, a surface of the steel sheet was placed in a vise, was bent 180° with a pressure of 1 kgf and then tightened until it became flat (0T-bending). When scotch tape is attached to a bent coating film and a coating layer was then peeled off, an occurrence of cracks and the presence or absence of peeling were evaluated.

[Evaluation Criteria] ⊚: no cracks or peeling, ○: fine cracks visible, but no peeling of the coating film, Δ: severe cracking, and no peeling of the coating film, and X: cracks and peeling of the coating film.

### (6) Chemical Resistance Evaluation

A gauze soaked in Methyl Ethyl Ketone (MEK) was rubbed reciprocally at 1 kgf and the number of times until the coating film was peeled was measured and evaluated.

[Evaluation Criteria] ⊚: 100 or more times, ○: 70 or more but less than 100 times, Δ: 40 or more times but less than 70 times, and X: less than 40 times.

### (7) Antiviral Evaluation

An antiviral evaluation was conducted by KR BIOTECH Ltd. according to ISO21702 standard. 400 mL of a stock solution of COVID-19 (2.15×10⁷ TCID50/ml) virus cultured in monkey cells (Vero E6) was dropped on each of control and composite resin-coated steel sheet specimens (50X50mm), was covered with a cover glass, and was incubated at room temperature for a certain period of time, and after 2 hours of reaction, the virus was recovered by washing with 10 mL of SCDLP medium, and using a SCDLP solution, the virus solution was diluted step by step until it reached 10⁻¹ to 10⁻⁵ to prepare a sample solution (2 sets of 5 wells). Each smear was infected with monkey host cells (Vero E6 Cell) and cultured at 37°C for 24 hours. After dropping MTT staining solution (Triazolium) into each cultured well, the survival of host cells was determined by observing the change in color. A concentration value (*TCID50*) of living cells in the well was calculated using a statistical method (Spearman-Karber method), and a virus killing rate was quantitatively evaluated as compared to an uncoated galvanized steel sheet control group.

[Evaluation Criteria] Virus Killing Rate ⊚: 99.0% or more, O: 90 or more to less than 99.0%, Δ: 80 or more and less than 90%, X: less than 80%.

### (8) Antibacterial Evaluation

An antibacterial evaluation was conducted by the Korea Institute of Construction and Living Environment for four types of bacteria (E. coli, Pseudomonas aeruginosa, Staphylococcus aureus, and Pneumococcus) according to the JIS Z 2801:2012 standard. A control group and a composite resin-coated steel sheet (50X50mm) were placed in a plastic petri dish, and the inoculum bacteria (2.5×10⁵ to 10⁶ CFU/ml) were cultured in NB (nutritional) medium and 400 µL of the bacterial solution was added dropwise. In this case, the sample was covered with a Stomacher film (40X40 mm) to ensure close contact between the bacterial solution and the sample, and a test was performed with a constant contact area. After an inoculated specimen was incubated for 24 hours under temperature (35±0.1°C) and relative humidity (92.9±0.5%) conditions, the bacteria were recovered by washing with 10 mL of a SCDLP medium and diluted step by step, and a sample liquid was prepared until it reached 10⁻¹ to 10⁻⁵. 1 mL of sample solution was dispensed into a petri dish, and 1.5% agar medium was added and mixed. An inverted petri dish was placed in an incubator at 37°C and the bacteria were cultured for 24 hours, and the number of colonies was counted, the viable number of bacteria (CFU/0.1 mL, Log10) (CFU: colonyforming units) was calculated, and a killing rate of bacteria was quantitatively evaluated as compared with an uncoated galvanized steel sheet control group.

[Evaluation Criteria] Bacterial Killing Rate ⊚: 99.0% or more, (): 90 or more to less than 99.0%, Δ: 80 or more and less than 90%, and X: less than 80%

### (9) Anti-fungal Evaluation

A test was conducted on five types of mold *(Aspergillus niger, Penicillium pinophilum, Chaetomium globosum, Gliocladiumvirensr Aureobasidium pullulans*) at the Korea Institute of Construction and Living Environment according to the standard test method (KCL FIR-1003:2011). Four weeks after inoculating the fungal strain on a surface of a steel sheet (size 50x50mm), anti-fungal properties were evaluated by evaluating a growth area of fungal hyphae.

[Evaluation Criteria] An area of a fungal hyphae growth part on an inoculated part of a specimen ⊚: less than 3% of the total area, O: 3 or more and less than 10% of the total area, Δ: 10 or more and less than 20% of the total area, and X: more than 20% of the total area.

The results of the evaluation are shown in Table 2 below.

**Table 2:**

| DIVISION | ANTIMICROBIAL COATING LAYER | | PRIMER COATING LAYER (*µ*m) | APPEARANCE DESIGN | GLOSSINESS | PENCIL HARDNESS | CORROSION RESISTANCE | PROCESSABILITY | CHEMICAL RESISTANCE | ANTIVIRAL | ANTIMICROBIAL | ANTIFUNGAL |
|---|---|---|---|---|---|---|---|---|---|---|---|---|
| | COMPOSITION | THICKNESS (*µ*m) | | | | | | | | | | |
| INVENTIVE EXAMPLE 11 | INVENTIVE EXAMPLE 1 | 20 | 0 | ○ | 20 | 2H | ⊚ | ⊚ | ⊚ | ⊚ | ⊚ | ⊚ |
| INVENTIVE EXAMPLE 18 | | 20 | 5 | ⊚ | 25 | 2H | ⊚ | ⊚ | ⊚ | ⊚ | ⊚ | ⊚ |
| INVENTIVE EXAMPLE 19 | INVENTIVE EXAMPLE 2 | 20 | 0 | ○ | 20 | 2H | ⊚ | ⊚ | ⊚ | ⊚ | ⊚ | ⊚ |
| INVENTIVE EXAMPLE 20 | INVENTIVE EXAMPLE 3 | 20 | 5 | ○ | 20 | 2H | ⊚ | ⊚ | ⊚ | ⊚ | ⊚ | ⊚ |
| INVENTIVE EXAMPLE 21 | INVENTIVE EXAMPLE 4 | 20 | 5 | ○ | 20 | 2H | ⊚ | ⊚ | ⊚ | ⊚ | ⊚ | ⊚ |
| INVENTIVE EXAMPLE 22 | INVENTIVE EXAMPLE 5 | 20 | 5 | ○ | 20 | 2H | ⊚ | ⊚ | ⊚ | ⊚ | ⊚ | ⊚ |
| INVENTIVE EXAMPLE 23 | INVENTIVE EXAMPLE 6 | 20 | 5 | ○ | 20 | 2H | ⊚ | ⊚ | ⊚ | ⊚ | ⊚ | ⊚ |
| INVENTIVE EXAMPLE 24 | INVENTIVE EXAMPLE 7 | 20 | 0 | ○ | 20 | 2H | ⊚ | ⊚ | ⊚ | ⊚ | ⊚ | ⊚ |
| INVENTIVE EXAMPLE 25 | | 20 | 5 | ⊚ | 25 | 2H | ⊚ | ⊚ | ⊚ | ⊚ | ⊚ | ⊚ |
| INVENTIVE EXAMPLE 26 | INVENTIVE EXAMPLE 8 | 20 | 5 | ○ | 20 | 2H | ⊚ | ⊚ | ⊚ | ⊚ | ⊚ | ⊚ |
| INVENTIVE EXAMPLE 27 | INVENTIVE EXAMPLE 9 | 20 | 5 | ○ | 20 | 2H | ⊚ | ⊚ | ⊚ | ⊚ | ⊚ | ⊚ |
| INVENTIVE EXAMPLE 28 | INVENTIVE EXAMPLE 10 | 20 | 5 | O | 20 | 2H | ⊚ | ⊚ | ⊚ | ⊚ | ⊚ | ⊚ |
| INVENTIVE EXAMPLE 29 | INVENTIVE EXAMPLE 11 | 20 | 5 | ○ | 20 | 2H | ⊚ | ⊚ | ⊚ | ⊚ | ⊚ | ⊚ |
| INVENTIVE EXAMPLE 30 | INVENTIVE EXAMPLE 1 | 20 | 5 | ○ | 20 | 2H | ⊚ | ⊚ | ⊚ | ⊚ | ⊚ | ⊚ |
| INVENTIVE EXAMPLE 31 | INVENTIVE EXAMPLE 12 | 20 | 5 | O | 20 | 2H | ⊚ | Δ | ⊚ | Δ | Δ | Δ |
| INVENTIVE EXAMPLE 32 | INVENTIVE EXAMPLE 14 | 20 | 5 | O | 20 | 2H | Δ | ⊚ | ⊚ | Δ | Δ | Δ |
| INVENTIVE EXAMPLE 33 | INVENTIVE EXAMPLE 15 | 20 | 5 | ○ | 20 | 2H | ⊚ | Δ | ○ | Δ | Δ | Δ |
| INVENTIVE EXAMPLE 34 | INVENTIVE EXAMPLE 16 | 20 | 5 | ○ | 20 | 2H | ⊚ | ○ | Δ | Δ | Δ | Δ |
| COMPARATIVE EXAMPLE 4 | COMPARATIVE EXAMPLE 1 | 20 | 5 | ○ | 20 | 2H | ⊚ | ⊚ | Δ | × | × | × |
| COMPARATIVE EXAMPLE 5 | COMPARATIVE EXAMPLE 2 | 20 | 5 | ○ | 20 | 2H | ⊚ | Δ | ⊚ | × | × | × |
| COMPARATIVE EXAMPLE 6 | COMPARATIVE EXAMPLE 3 | 20 | 5 | ○ | 20 | 2H | ⊚ | ⊚ | Δ | × | × | × |

As illustrated in Examples 31 to 34 of Table 2 above, when the anti-microbial agent was used as a mixture, this showed more excellent antiviral properties, excellent antimicrobial properties, and excellent anti-fungal properties. That is, among the results of Table 2, Examples 17 to 30 correspond to experimental examples to which one of Examples 1 to 12 using two or more anti-bio compounds as a mixture is applied, which showed more excellent antiviral, antimicrobial, and antifungal properties, as compared to Examples 31 to 34 corresponding to experimental examples of applying one of Examples 13 to 16 using only one of the components of the anti-bio compound (hydroxyapatite and calcium hydroxide), and Comparative Examples 4 to 6 corresponding to the Comparative Experimental Example to which one of Comparative Examples 1 to 3 without using the anti-bio compound was applied.

## Claims

1. An antimicrobial coating composition, comprising:
30 to 60 weight % of a polyester resin;
3 to 15 weight % of a curing agent;
0.1 to 5 weight % of an anti-microbial agent;
3.0 to 15 weight % of a pigment; and
a balance of a solvent, on the basis of the total weight of the coating composition.

2. The antimicrobial coating composition of claim 1, wherein the polyester resin is a urethane modified polyester resin.

3. The antimicrobial coating composition of claim 1, wherein the curing agent is an aziridine-based curing agent, a melamine-based curing agent, or an isocyanate-based curing agent.

4. The antimicrobial coating composition of claim 1, wherein the anti-microbial agent is a mixture of M₁₀(ZO₄)₆X₂ and Ca(OH)₂,
where the M is Ca, Ba, Mg, Zn, Ni, Fe or Al,
the Z is P, As, V, or Si, and
the X is F, OH, Cl, O, or CO₃.

5. The antimicrobial coating composition of claim 4, wherein the anti-microbial agent is a mixture of Ca₁₀(PO₄)₆(OH)₂ and Ca(OH)₂ in a weight ratio of 3:1 to 1:3.

6. The antimicrobial coating composition of claim 1, wherein the pigment is at least one selected from the group consisting of carbon black, carbon nanotubes, graphite, graphene, ferric oxide (Fe₂O₃) and titanium dioxide (TiO₂).

7. The antimicrobial coating composition of claim 1, wherein the pigment has a particle diameter of 0.01 to 20 um and has an oil absorption rate of 5 to 60%.

8. The antimicrobial coating composition of claim 1, wherein a peak metal temperature (PMT) of the composition is 180 to 260°C.

9. The antimicrobial coating composition of claim 1, wherein the solvent is at least one selected from the group consisting of toluene, xylene, isopropanol, solvent naphtha, cellosolve, cellosolve acetate, and butyl cellosolve.

10. An anti-microbial coated steel sheet, comprising:
a steel sheet; and
an anti-microbial coating layer formed on at least one surface of the steel sheet,
wherein at least a portion of the antimicrobial coating layer includes an anti-microbial agent, and
the anti-microbial agent has a weight ratio of Z/(M+Ca) of 0.1 to 0.5,
where the M is Ca, Ba, Mg, Zn, Ni, Fe or Al, and
the Z is P, As, V, or Si.

11. The anti-microbial coated steel sheet of claim 10, wherein the steel sheet is a plated steel sheet.

12. The anti-microbial coated steel sheet of claim 11, wherein the plated steel sheet is a hot-dip galvanized steel sheet (GI), an alloyed hot-dip galvanized steel sheet (GA), an electro-galvanized steel sheet (EG), an aluminum plated steel sheet, or a zinc-aluminum-magnesium (Zn-Al-Mg) ternary alloy plated steel sheet.

13. The anti-microbial coated steel sheet of claim 10, wherein the anti-microbial agent is a mixture in which M₁₀ (ZO₄)₆X₂ and Ca(OH)₂ are mixed at a weight ratio of 3:1 to 1: 3,
where the M is Ca, Ba, Mg, Zn, Ni, Fe or Al,
the Z is P, As, V, or Si, and
the X is F, OH, Cl, O, or CO₃.

14. The anti-microbial coated steel sheet of claim 10, wherein the anti-microbial coating layer has a thickness of 3 to 40 um after drying.

15. The anti-microbial coated steel sheet of claim 10, wherein the anti-microbial coated steel sheet further comprises a primer coating layer provided between the steel sheet and the anti-microbial coating layer.

16. An anti-microbial coated steel sheet, comprising:
a steel sheet; and
an anti-microbial coating layer formed on at least one surface of the steel sheet,
wherein the anti-microbial coating layer is formed of the antimicrobial coating composition according to any one of claims 1 to 9.
